Europäisches Patentamt

European Patent Office

Office européen des brevets

(19)

(11) Veröffentlichungsnummer: **0 015 462**
**B1**

(12) # EUROPÄISCHE PATENTSCHRIFT

(45) Veröffentlichungstag der Patentschrift:
29.12.82

(51) Int. Cl.³: **B 60 L 1/12**

(21) Anmeldenummer: 80100901.0

(22) Anmeldetag: 25.02.80

(54) Einrichtung zur Versorgung von Nutzverbrauchern in einem Eisenbahnfahrzeug.

(30) Priorität: 12.03.79 DE 2909686

(43) Veröffentlichungstag der Anmeldung:
17.09.80 Patentblatt 80/19

(45) Bekanntmachung des Hinweises auf die Patenterteilung:
29.12.82 Patentblatt 82/52

(84) Benannte Vertragsstaaten:
AT BE CH FR IT LU NL

(56) Entgegenhaltungen:
DE-A-1 763 076
DE-A-2 613 553
FR-A-2 324 152
FR-A-2 383 540
ZEITSCHRIFT FÜR DIE GESAMTE TEXTILIN-
DUSTRIE, Band 70, Nr. 7, Juli 1968, Seite 505
Düsseldorf, DE. »Allgemeine Elektrizitätsgesellschaft«

(73) Patentinhaber: Fried. Krupp Gesellschaft mit
beschränkter Haftung, Altendorfer Strasse 103,
D-4300 Essen 1 (DE)

(72) Erfinder: Seeger, Herbert, Langeoogweg 1,
D-4300 Essen 1 (DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Einrichtung zur Versorgung von Nutzverbrauchern in einem Eisenbahnfahrzeug

Die Erfindung betrifft eine Energieversorgungseinrichtung für eine an einem Reisezugwagen angeordnete mit einem Kälteaggregat und einer Widerstandsheizung ausgestattete Klimaanlage sowie ein Batterieladegerät und Lüftermotoren, die wahlweise an ein Wechsel- oder Gleichspannungsnetz angeschlossen werden kann, die verschieden hohe Wechselspannungen mit unterschiedlicher Frequenz oder verschieden hohe Gleichspannungen führen, wobei bei Gleichspannungseinspeisung ein Hochleistungs-Wechselrichter zum Einsatz kommt, mit wenigstens einem Hochspannungs-Transformator, einem Gleichrichtergerät, einem aus Einphasen-Wechselrichtern in Mittelpunktschaltung aufgebauten Mehrphasen-Wechselrichter zur spannungs- und frequenzveränderlichen Speisung eines Kompressormotors für das Kälteaggregat sowie einer für die Klimaanlage dienenden Regelung, die auf den Kompressormotor und/oder die Widerstandsheizung einwirkt.

Es ist eine Klimaanlage gemäß dem Oberbegriff des Patentanspruchs 1 bekannt (FR-A-2 383 540), bei der dem Kompressormotor des Kälteaggregats zwei Wechselrichter in Mittelpunktschaltung als elektronischer Kommutator vorgeschaltet sind, wobei ihre Wechselrichtertransformatoren jeweils zwei voneinander getrennte Wicklungen (Primär- und Sekundärwicklung) aufweisen. Die Sekundärwicklungen weisen Wicklungsanzapfungen auf, die zu Schaltern geführt sind. Durch die Schalter wird das Übersetzungsverhältnis jedes Wechselrichtertransformators stufig geändert, wodurch die Motorspannung stufig geändert werden kann. Da die Thyristoren der Wechselrichter von einem in dem Kompressormotor angeordneten Rotorlagenmeßwertgeber angesteuert werden, so wird die Wechselrichterfrequenz kleiner, wenn die Drehzahl des Kompressormotors verkleinert wird. Entsprechend der Höhe der Motorspannung stellt sich eine bestimmte Drehzahl ein. Durch die Schalter kann die Drehzahl des Kompressormotors stufig verändert werden.

Bei solchen Energieversorgungseinrichtungen müssen die Transformatoren der Wechselrichter baumäßig für die maximale Nennleistung des Kompressormotors entsprechend groß ausgelegt sein, wodurch diese viel Platz benötigen.

Der Erfindung liegt die Aufgabe zugrunde, eine Energieversorgungseinrichtung zu schaffen, die wenig Gewicht aufweist, deren Gesamtverluste (Wirkungsgrad und cos Phi) klein sind und durch die die Drehzahl des Kompressormotors des Kälteaggregates mit einfachen Mitteln geregelt werden kann.

Die Aufgabe wird erfindungsgemäß dadurch gelöst, daß bei einer Energieversorgungseinrichtung der eingangs genannten Art der Kompressormotor ein Drehstrommotor ist, wobei die Frequenz der speisenden Thyristor-Einphasen-Wechselrichter entsprechend der Höhe der einem Dreikanal-Taktgeber zugeführten Eingangs-Gleichspannung des Mehrphasen-Wechselrichters gesteuert ist, daß das Gleichrichtergerät in Mittelpunktschaltung ausgeführt ist und Dioden und Thyristoren aufweist, denen ein Spartransformator mit ausgangsseitigen Wicklungsanzapfungen vorgeschaltet ist, und daß die Wicklungsanzapfungen, an denen die höhere Spannung ansteht, mit den Thyristoren und die Wicklungsanzapfungen, an denen die niedrigere Spannung ansteht, mit den Dioden verbunden sind, wobei die Dioden eine Teilspannung als Grundspannung und die Thyristoren eine weitere steuerbare Teilspannung liefern und der Phasenanschnittwinkel für die Thyristoren in Abhängigkeit von den Signalen eines Temperaturmeßwertgebers zur Steuerung der Kälteleistung derart angesteuert wird, daß der Phasenanschnittwinkel bei großer Kälteleistung kleiner ist — hohe steuerbare Teilspannung — als bei kleiner Kälteleistung — niedrige steuerbare Teilspannung —.

Dadurch wird insbesondere erreicht, daß die Energieversorgungseinrichtung durch den Einsatz eines Spartransformators zur Spannungsanpassung des Kompressormotors an die Sammelschienenspannung sehr klein und daher sehr leicht ist. Da die Spannungsanpassung durch den Spartransformator erfolgt, benötigen die Thyristor-Wechselrichter keinen mit Anzapfungsumschaltungen versehenen Transformator, wodurch Gewicht eingespart werden kann. Der erfindungsgemäße Einsatz der Dioden und der Thyristoren führt dazu, daß durch den Phasenanschnitt der steuerbaren Teilspannung sich ein großer cos Phi einstellt, wodurch der Spartransformator nur eine kleine Blindleistung zu übertragen braucht und daher nochmals leichter ausgeführt sein kann.

Noch günstigere Bau- und Betriebsbedingungen ergeben sich bei den alternativen Ausführungsformen der Erfindung gemäß den Ansprüchen 2 und 3. Es werden weniger Wicklungsanzapfungen am Spartransformator benötigt, und in der Ausführung nach Anspruch 3 kann die Drehzahl des Kompressormotors bis zum Stillstand heruntergesteuert werden. Durch die Spannungsumschaltung mittels der mit den Gleichrichtern verbundenen Thyristoren wird erreicht, daß der cos Phi auch bei kleiner Motorspannung groß bleibt.

In weiterer vorteilhafter Ausgestaltung der Erfindung ist jeweils der Kompressormotor mit Wicklungsmittenanzapfungen ausgestattet und dienen die Wicklungen des Kompressormotors gleichzeitig als Wechselrichterwicklung für die Einphasen-Wechselrichter in Mittelpunktschaltung.

Werden schließlich für die Einphasen-Wechselrichter in Mittelpunktschaltung Spartransformatoren als Wechselrichtertransformatoren eingesetzt, so lassen sich handelsübliche Kompressormotoren verwenden.

Wenn die Kompressormotorfrequenz sich proportional zur Kompressormotorspannung ändert, so wird der Kompressormotor optimal genutzt, so daß er entsprechend klein ausgeführt sein kann.

Mehrere Ausführungsbeispiele der Erfindung sind in der Zeichnung dargestellt und werden im folgenden näher beschrieben.

Es zeigt

Fig. 1 ein Schaltbild der Energieversorgungsanlage mit einem gesteuerten Gleichrichtergerät und drei Wechselstrom-Wechselrichtern mit einem Kompressormotor in Mittelpunktschaltung,

Fig. 2 ein Schaltbild eines Netzgerätes zur Stromversorgung des Kompressormotors,

Fig. 3 ein Schaltbild eines weiteren Netzgerätes zur Stromversorgung des Kompressormotors,

Fig. 4 Liniendiagramme der Zündimpulse für die drei Wechselstrom-Wechselrichter,

Fig. 5 Liniendiagramme von Stromimpulse, die die Wechselstrom-Wechselrichter liefern und

Fig. 6 ein Schaltbild einer Energieversorgungsanlage mit einem gesteuerten Gleichrichtergerät und drei Wechselstrom-Wechselrichtern in Mittelpunktschaltung.

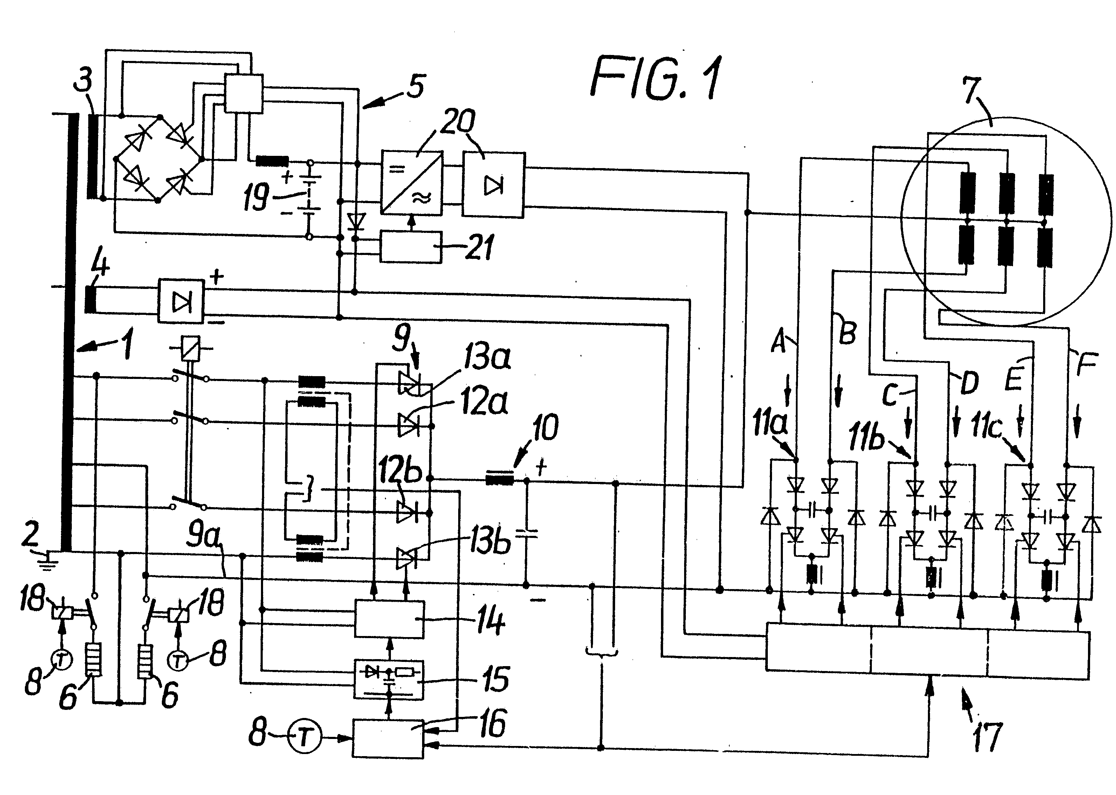

Die in Fig. 1 der Zeichnung dargestellte Energieversorgungseinrichtung besitzt eingangsseitig einen Transformator 1, der z. B. über eine Sammelschiene und Masse 2 (Erde) vom Bahnnetz mit Wechselspannung versorgt wird. Bei Gleichspannungseinspeisung wird dem Transformator 1 ein in der Zeichnung nicht dargestellter Hochleistungs-Wechselrichter vorgeschaltet. Der Transformator 1 ist für die Versorgung der Klimaanlage als Spartransformator ausgebildet und für die anderen Verbraucher sind Sekundärwicklungen 3, 4 vorgesehen. Eine der Sekundärwicklungen 3 ist für ein Batterieladegerät 5 vorgesehen und die andere Sekundärwicklung 4 liefert die Versorgungsspannung für mehrere Taktgeber.

Die Klimaanlage besitzt eine über Schütze 18 zuschaltbare Widerstandsheizung 6 zur Nachheizung (befindet sich in jedem Abteil) und einen Kompressormotor 7; beide werden von einem Temperaturmesser 8 beeinflußt. Außerdem besitzt die Klimaanlage eine, in Fig. 1 nicht dargestellte, Hauptheizung. Zwischen dem Spartransformator und dem Kompressor 7, z. B. Asynchronmotor, sind ein Schütz, ein gesteuertes Gleichrichtergerät 9, ein elektrisches Filter 10 und drei Wechselstrom-Wechselrichter 11a, 11b, 11c geschaltet.

Das Gleichrichtergerät 9 besteht aus zwei Dioden 12a, 12b und zwei Thyristoren 13a, 13b. Die Dioden 12a, 12b und die Thyristoren 13a, 13b sind jeweils in Mittelpunktschaltung gesetzt, wobei jede Diode 12a, 12b mit ihrer Anode an jeweils einer von zwei Wicklungsanzapfungen und jeder Thyristor 13a, 13b mit seiner Anode an jeweils einer von zwei weiteren Wicklungsanzapfungen angeschlossen ist. Diese Wicklungsanzapfungen sind so ausgeführt, daß zwischen den für die Thyristoren 13a, 13b vorgesehenen Wicklungsanzapfungen gegenüber der für die Dioden 12a, 12b vorgesehenen Wicklungsanzapfungen eine doppelt so hohe Spannung ansteht. Die Kathoden der Dioden 12a, 12b und der Thyristoren 13a, 13b sind miteinander verbunden und bilden mit dem Mittelpunktleiter 9a den Ausgang des Gleichrichtergeräts 9, wobei sich am Mittelpunktleiter 9a ein Minuspol und an den Kathoden der Dioden 12a, 12b bzw. Thyristoren 13a, 13b ein Pluspol ausbildet. Die beiden Thyristoren 13a, 13b werden von einem Zündimpulsgeber 14 angesteuert. Dem Zündimpulsgeber 14 ist ein Zeitglied 15 und diesem ein Taktgeber 16 vorgeschaltet. Dieser Taktgeber 16 steht mit dem Temperaturmesser 8 in Verbindung. Außerdem beeinflußt die hinter dem elektrischen Filter 10 — Glättungsdrossel und Glättungskondensator — anstehende Spannung und der durch die Thyristoren 13a, 13b fließende Strom den Taktgeber 16.

Die drei Wechselstrom-Wechselrichter 11a, 11b, 11c und der Kompressormotor 7 sind an dem Filter 10 angeschlossen. Der Kompressormotor 7 besitzt drei Wicklungen, die mit Mittenanzapfungen ausgestattet sind. Die Mittenanzapfungen sind miteinander und mit dem Pluspol verbunden. Jeder Wechselstrom-Wechselrichter 11a, 11b, 11c besitzt zwei Thyristoren, zwei Sperrdioden, zwei Freilaufdioden, einen Kommutierungskondensator und eine Kommutierungsdrossel. Die drei Kommutierungsdrosseln sind mit dem Minuspol verbunden. Jeder Wechselstrom-Wechselrichter 11a, 11b, 11c ist mit dem Kompressormotor 7 in Mittelpunktschaltung geschaltet, d. h. jede der drei Wicklungen des Kompressormotors 7 bildet für den maßgebenden Wechselstrom-Wechselrichter 11a, 11b, 11c eine Wechselrichterwicklung zur Spannungsverdopplung für den Kommutierungskondensator. Die Thyristoren der Wechselstrom-Wechselrichter 11a, 11b, 11c stehen mit einem Dreikanal-Taktgeber 17 in Verbindung. Dieser Dreikanal-Taktgeber 17 ist mit dem Plus- und Minuspol des Filters 10 verbunden.

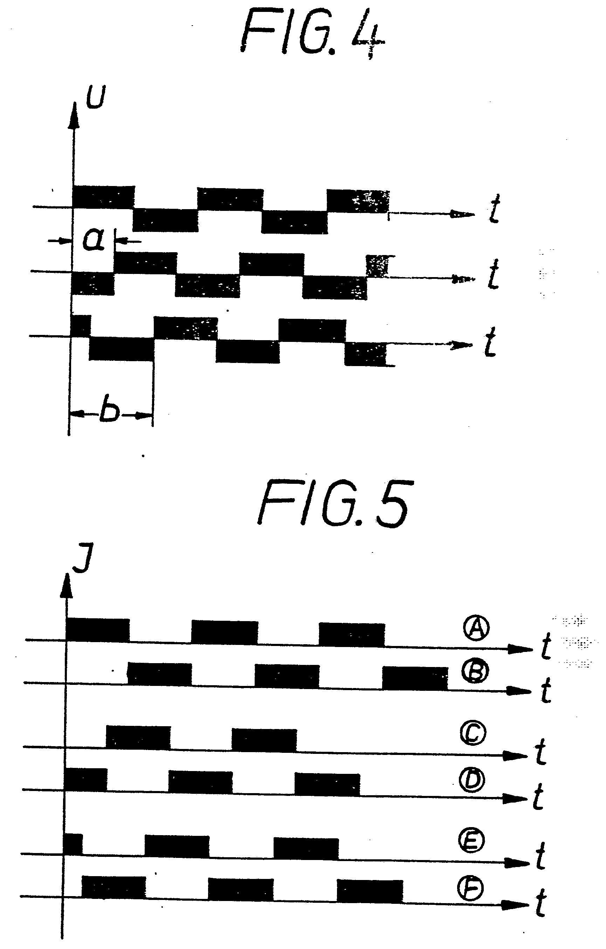

Die Höhe der zwischen dem Plus- und Minuspol anstehenden Spannung bestimmt die Frequenz der Zündimpulse des Dreikanal-Taktgebers 17; je höher die Spannung desto größer die Frequenz. In Fig. 4 der Zeichnung sind die Zündimpulse — zur besseren Erläuterung rechteckförmig gezeichnet — für die Thyristoren in drei Liniendiagrammen dargestellt. (Eingeschwungener Zustand.)

Der erste Kanal des Dreikanal-Taktgebers 17 steuert den in Fig. 1 links dargestellten Thyristor des ersten Wechselstrom-Wechselrichters 11a an. Gleichzeitig wird auch der zweite Kanal des Dreikanal-Taktgebers 17 angesteuert. Dieser Kanal zündet den in Fig. 1 links dargestellten Thyristor des zweiten Wechselstrom-Wechselrichters 11b. Der Zeitabstand zwischen beiden Zündimpulsen ist in Fig. 4 durch die Strecke a angedeutet. Der erste Kanal des Dreikanal-Taktgebers 17 steuert außerdem auch noch den dritten Kanal an. Der Zeitabstand zwischen dem Zündimpuls vom ersten Kanal und dem Zündimpuls vom dritten Kanal ist in Fig. 4 durch die Strecke b angedeutet.

Werden die Thyristoren, wie eben beschrieben, angesteuert, so fließen in den sieben Motorzuleitungen des Kompressormotors 7 folgende Stromimpulse.

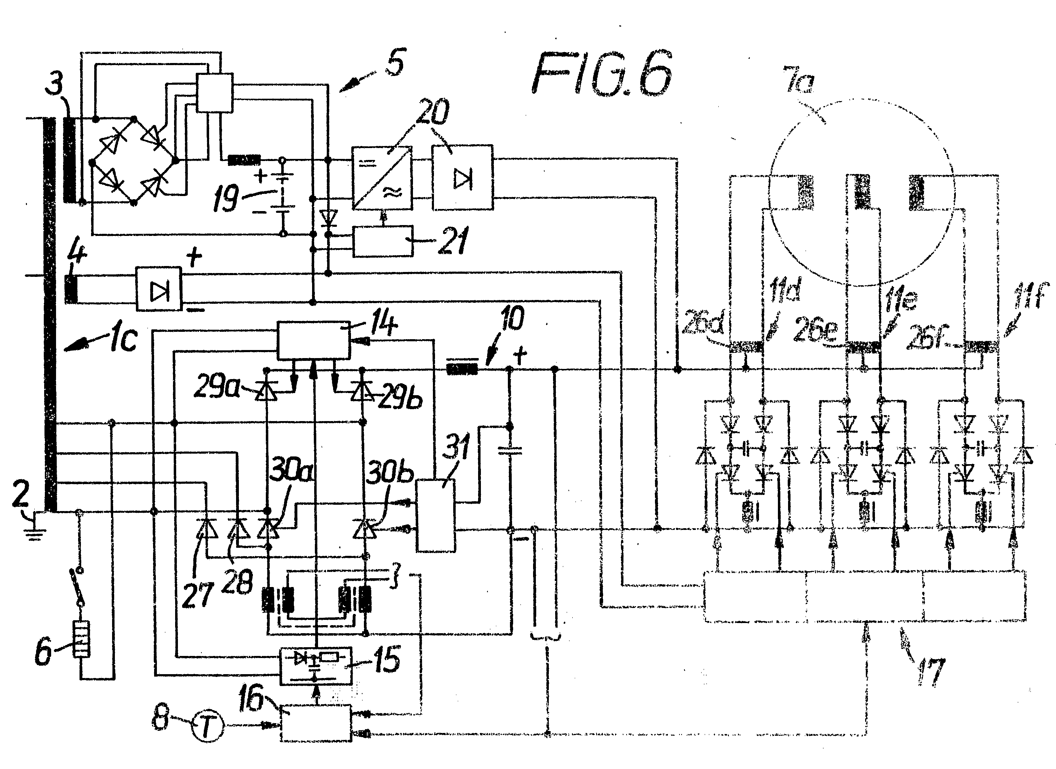

In Fig. 5 der Zeichnung sind die Stromimpulse der drei Wechselstrom-Wechselrichter 11a, 11b, 11c dargestellt, wobei diese wiederum zur besseren Erläuterung rechteckförmig gezeichnet sind und ohmsche Last angenommen wird. Im ersten Liniendiagramm von Fig. 5 sind die Stromimpulse dargestellt, die in der ersten Motorzuleitung A und im zweiten Liniendiagramm sind die Stromimpulse dargestellt, die in der zweiten Motorzuleitung B fließen. In diesen beiden Motorzuleitungen A und B folgen die Stromimpulse taktweise sowie abwechselnd aufeinander. Der zweite Wechselstrom-Wechselrichter 11b arbeitet genauso wie der erste, nur daß die Stromimpulse etwas später, zeitlich phasenverschoben sind. Dies ist in dem dritten — gilt für Motorzuleitung C — und dem vierten — gilt für Motorzuleitung D — Liniendiagramm von Fig. 5 dargestellt. Der dritte Wechselstrom-Wechselrichter 11c arbeitet genauso wie der erste, nur daß die Stromimpulse noch weiter phasenverschoben sind. Dies ist in den fünften und sechsten Liniendiagramm von Fig. 5 dargestellt.

Alle diese Stromimpulse gelangen vom Pluspol des Filters 10 über die Mittenanzapfungen der Wicklungen des Kompressormotors 7 über die zugehörigen Wicklungen des Kompressormotors 7 über die entsprechenden Thyristoren zu dem Minuspol des Filters 10 und bewirken, daß der Rotor des Kompressormotors 7 sich dreht.

Diese Klimaanlage arbeitet wie folgt beschrieben:

Über das Schütz wird das Gleichrichtergerät 9 mit Spannung beaufschlagt. Die Thyristoren 13a, 13b werden nicht angesteuert. Am Filter 10 liegt eine Spannung in Höhe der Grundspannung an. Über die Wechselstrom-Wechselrichter 11a, 11b, 11c wird der Kompressormotor 7 mit geringer Spannung (etwa halbe Nennspannung) und geringer Frequenz in seiner Drehzahl hochgefahren. Durch diese Maßnahme wird der Einschaltstrom gering gehalten. Wird eine größere Kälteleistung mittels des Temperaturfühlers 8 benötigt, so werden die Thyristoren 13a, 13b mittels des Zeitgliedes 15 angesteuert; und zwar phasenanschnittssweise. Dabei wird die Ausgangsspannung am Filter 10 durch die Grundspannung und die durch Phasenanschnittsteuerung der Thyristoren 13a, 13b sich bildende und überlagernde Spannung bestimmt. Dadurch erhöht sich die Frequenz der Wechselstrom-Wechselrichter 11a, 11b, 11c und der Kompres-sormotor 7 erhöht seine Drehzahl.

Der Taktgeber 16 besitzt drei Signaleingänge.

Der Taktgeber 16 verarbeitet das Signal Temperatur, das Signal Strom durch beide Thyristoren 13a, 13b des Gleichrichtergerätes 9 und das Signal Spannung am Ausgang des Filters 10 und gibt dieses gebildete Signal auf das Zeitglied 15. Das Zeitglied 15 bewirkt, daß die Spannung mittels des gesteuerten Gleichrichtergerätes 9 nicht sehr schnell hochgefahren wird und somit keine großen Stromspitzen bei Drehzahlerhöhungen des Kompressormotors 7 entstehen können.

Ist nur eine geringe Kälteleistung erforderlich, so liegt an dem Filter 10 nur die Grundspannung an. Dadurch ist in diesem Fall der cos Phi-Wert nur durch den Aufbau des Kompressormotors 7 festgelegt und daher entsprechend groß. Auch stellt sich in den Zwischenbereichen zwischen Grundspannung und Maximalspannung mittels des Phasenanschnitts ein günstiger cos Phi-Wert ein.

Die Widerstandsheizung 6 (Nachheizung) wird auch über die Ausgangswicklung der Sparwicklung des Transformators 1 mit Energie versorgt. Dies erfolgt mittels von der Temperatur gesteuerter magnetischer Schalter 18. Wenn die Nachheizleistung ansteigt, fällt die Kompressorleistung; und zwar zueinander proportional. Dadurch braucht die Ausgangswicklung der Sparwicklung des Transformators 7 nur für die maximale Leistung des Kompressormotors 7 ausgelegt zu werden.

Die Klimaanlage besitzt außerdem noch eine Notstromeinrichtung, die mit einer Batterie 19 ausgestattet ist. Die Batterie 19 wird über das gesteuerte Ladegerät 5 mit Energie versorgt. An der Batterie 19 sind die drei Wechselstrom-Wechselrichter 11a, 11b, 11c über einen Hilfsgleichspannungswandler 20 angeschlossen. Ein weiterer Taktgeber 21 steuert die Halbleiter des Hilfsgleichspannungswandler 20 an. Die Stromversorgung des Taktgebers 21 und des Dreikanal-Taktgebers 17 erfolgt bei Speisespannungsunterbrechung von der Batterie 19. Die Batterie versorgt außerdem die drei Wechselstrom-Wechselrichter 11a, 11b, 11c mit einer kleinen Spannung, so daß die Wechselstrom-Wechselrichter weiter in Funktion bleiben.

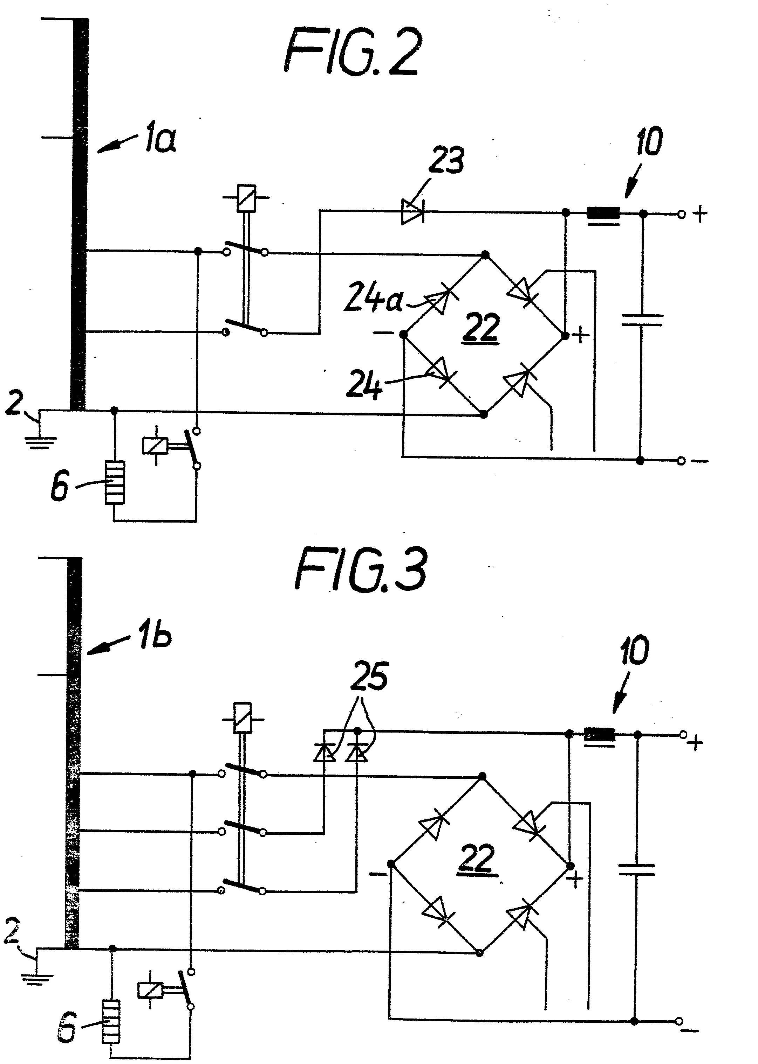

Fig. 2 und Fig. 3 zeigen jeweils ein Stromversorgungsteil für den Kompressormotor 7. Alle anderen Schaltelemente sind weggelassen.

Gemäß Fig. 2 besitzt die Ausgangswicklung der Sparwicklung des Transformators 1a drei Wicklungsanzapfungen, wobei die beiden äuße-ren Wicklungsanzapfungen zu einer halbge-steuerten Graetzbrücke 22 geführt sind. Die Wicklungsanzapfung ist eine Mittenanzapfung und ist über eine Diode 23 an dem Filter 10 angeschlossen. Die erste Teilspannung als Grundspannung liefern abwechslungsweise beide Wicklungsteile über die Diode 23 und ein Halbleiterdioden 24/24a der Graetzbrücke 22. Die andere Teilspannung wird durch Phasenanschnittssteuerung mittels der Thyristoren der Graetzbrücke 22 gesteuert.

Gemäß Fig. 3 besitzt die Ausgangswicklung der Sparwicklung des Transformators 1b vier Wicklungsanzapfungen. Die Wicklungsanzapfungen sind zueinander im gleichen Abstand angeordnet. Die beiden äußeren Wicklungsanzapfungen sind wie in Fig. 2 zu einer halbgesteuerten Graetzbrücke 22 geführt. Die anderen beiden Wicklungen sind jeweils über eine Diode 25 mit dem Pluspol der Graetzbrücke 22 verbunden.

Die drei verschieden aufgebauten Stromversorgungsteile besitzen unterschiedliche Vorteile. Bei der ersten Ausführung (Mittelpunkt — Mittelpunktschaltung) (Fig. 1) ist, weil das Übersetzungsverhältnis klein ist, der Spartransformator 1 klein. Die Grundspannung ist vor dem Filter 10 lückenlos. Bei der zweiten und dritten Ausführung werden die Wicklungen durch Einsatz der Graetzbrücke 22 gut ausgenutzt.

Die in Fig. 6 der Zeichnung dargestellte Energieversorgungsanlage besitzt einen handelsüblichen Drehstrommotor 7a als Kompressormotor. Die Wechselstrom-Wechselrichter 11d, 11e, 11f besitzen gegenüber den in Fig. 1 dargestellten Wechselstrom-Wechselrichtern 11a, 11b, 11c jeweils einen Spartransformator 26d, 26e, 26f mit einer Mittenanzapfung. Die drei Mittenanzapfungen sind an dem Pluspol des Filters 10 angeschlossen. Die beiden Wicklungsenden des jeweiligen Spartransformators 26d; 26e; 26f sind mit einer der Wicklungen des Drehstrommotors 7a und der Anode der jeweils maßgebenden Sperrdiode der Wechselstrom-Wechselrichter 11d, 11e, 11f verbunden. Die Thyristoren der Wechselstrom-Wechselrichter 11d, 11e, 11f werden mittels des Dreikanal-Taktgebers 17 — wie zu Fig. 1 beschrieben — angesteuert. Die Ausgangswicklung der Spartransformatoren 26d, 26e, 26f liefern die doppelte Eingangswechselrichterspannung.

Die Notstromeinrichtung ist genauso aufgebaut, wie sie in Fig. 1 dargestellt ist.

Gemäß Fig. 6 besitzt die Ausgangswicklung der Sparwicklung des Transformators 1c vier Wicklungsanzapfungen. Die Wicklungsanzapfungen sind zueinander im gleichen Abstand angeordnet. Die beiden äußeren Wicklungsanzapfungen sind zu einer gesteuerten Graetzbrücke geführt. Die anderen beiden Wicklungsanzapfungen sind jeweils über eine Diode 27, 28 mit dem Minuspol des Filters 10 verbunden, wobei die Anoden an dem Minuspol angeschlossen sind. Die Thyristoren 29a, 29b; 30a, 30b der Graetzbrücke stehen paarweise mit einem Zündimpulsgeber 14 und einem Taktgeber 31 in Verbindung. Die beiden Thyristoren 29a, 29b, die kathodenseitig miteinander verbunden sind und an deren Kathoden sich ein Pluspol ausbildet, werden von dem Zündimpulsgeber 14 angesteuert. Dieser Zündimpulsgeber steht, genauso wie in Fig. 1 dargestellt, mit einem Zeitglied 15 und einem Taktgeber 16 in Verbindung. Die beiden Thyristoren 30a, 30b; die anodenseitig miteinander verbunden sind und an deren Anode sich ein Minuspol ausbildet, werden von dem Taktgeber 31 angesteuert. Dieser Taktgeber 31 ist mit einem Meßglied ausgestattet, das den Wert der am Glättungskondensator des Filters 10 anstehenden Spannung ermittelt. Die beiden letztgenannten Thyristoren 30a, 30b werden so angesteuert, daß sie sich entweder im Leitzustand oder Sperrzustand befinden.

Der Transformator 1c, die Thyristoren 29a, 29b, 30a, 30b arbeiten wie folgt zusammen:

Wird die maximale Drehzahl für den Kompressor verlangt, so liegt auch die höchstmögliche Spannung (Nennspannung) an den Motorklemmen. Die vier Thyristoren 29a, 29b, 30a, 30b werden so angesteuert, daß sie sich für die jeweils maßgebende Spannungshalbwelle im Leitzustand befinden. Soll nun die Drehzahl herabgesetzt werden, so bleiben zunächst die Thyristoren 30a, 30b, die mit dem Taktgeber 31 in Verbindung stehen, im Leitzustand. Die anderen Thyristoren 29a, 29b werden von dem Zündimpulsgeber 14 phasenanschnittweise angesteuert. Hierbei wird der maßgebende Thyristor 29a, 29b nicht im Spannungsnulldurchgang von Minus nach Plus gezündet, sondern etwas später. Das hat zur Folge, daß sich der Mittelwert der Spannung verkleinert und daß viele Oberwellen entstehen. Diese Oberwellen wirken sich schlecht auf den cos Phi der Klimaanlage aus. Sinkt z. B. der cos Phi von 0,95 während der Drehzahlverringerung auf einen Wert von 0,8, so werden die Thyristoren 30a, 30b, die mit dem Taktgeber 31 in Verbindung stehen, nicht mehr angesteuert, so daß sie in den Sperrbereich übergehen. Die anderen Thyristoren 29a, 29b gehen gleichzeitig in den Leitzustand über. Dieser erfolgt mittels des Zündimpulsgebers 14, der für diesen Fall von dem Taktgeber 31 beeinflußt wird. Der Mittelwert der Spannung hat sich dabei nicht geändert, aber die Oberwellen sind nahezu weggefallen, da kein Phasenanschnitt (lückenloser Betrieb) ausgeführt wird. Der cos Phi hat wieder einen Wert von 0,95. Hierbei fließen zwei Stromanteile bei einer positiven Spannungswelle von der oberen Wicklungsanzapfung der Sparwicklung über den Thyristor 29b, zu den Wechselstrom-Wechselrichtern und dem Drehstrommotor 7a, über die beiden Dioden 27, 28 zur Sparwicklung. Hierbei kommen nur die beiden oberen Wicklungsteile der Sparwicklung zum Einsatz. Steht eine negative Spannungswelle an, so kommen die beiden unteren Wicklungsteile der Sparwicklung zum Einsatz. Der mittlere Wicklungsteil kommt bei jeder Spannungswelle zum Einsatz. Dadurch wird eine Gleichstrommagnetisierung verhindert.

Soll die Drehzahl des Drehstrommotors weiter herabgesetzt werden, so wird wieder mittels Phasenanschnitt der Mittelwert der Spannung herabgesetzt. Hierbei verringert sich der cos Phi wiederum. Da für diesen Fall die zu übertragende Wirkleistung schon stark abgenommen hat, werden die Wechselstrom-Wechselrichter 11d, 11e, 11f durch den Anstieg der Blindleistung nicht überbeansprucht.

## Patentansprüche

1. Energieversorgungseinrichtung für eine an einem Reisezugwagen angeordnete mit einem Kälteaggregat und einer Widerstandsheizung (6) ausgestattete Klimaanlage sowie ein Batterieladegerät (5) und Lüftermotoren, die wahlweise an ein Wechsel- oder Gleichspannungsnetz angeschlossen werden kann, die verschieden hohe Wechselspannungen mit unterschiedlicher Frequenz oder verschieden hohe Gleichspannungen führen, wobei bei Gleichspannungseinspeisung ein Hochleistungs-Wechselrichter zum Einsatz kommt, mit wenigstens einem Hochspannungs-Transformator (1), einem Gleichrichtergerät (9), einem aus Einphasen-Wechselrichtern in Mittelpunktschaltung (11a, 11b, 11c) aufgebauten Mehrphasen-Wechselrichter zur spannungs- und frequenzveränderlichen Speisung eines Kompressormotors (7) für das Kälteaggregat sowie einer für die Klimaanlage dienenden Regelung, die auf den Kompressormotor und/ oder die Widerstandsheizung einwirkt, dadurch gekennzeichnet, daß der Kompressormotor ein Drehstrommotor (7) ist, wobei die Frequenz der speisenden Thyristor-Einphasen-Wechselrichter (11a, 11b, 11c) entsprechend der Höhe der einem Dreikanal-Taktgeber (17) zugeführten Eingangs-Gleichspannung des Mehrphasen-Wechselrichters gesteuert ist, daß das Gleichrichtergerät in Mittelpunktschaltung ausgeführt ist und Dioden (12a, 12b) und Thyristoren (13a, 13b) aufweist, denen ein Spartransformator (1) mit ausgangsseitigen Wicklungsanzapfungen vorgeschaltet ist, und daß die Wicklungsanzapfungen, an denen die höhere Spannung ansteht, mit den Thyristoren (13a, 13b) und die Wicklungsanzapfungen, an denen die niedrigere Spannung ansteht, mit den Dioden (12a, 12b) verbunden sind, wobei die Dioden (12a, 12b) eine Teilspannung als Grundspannung und die Thyristoren (13a, 13b) eine weitere steuerbare Teilspannung liefern und der Phasenanschnittwinkel für die Thyristoren (13a, 13b) in Abhängigkeit von den Signalen eines Temperaturmeßwertgebers zur Steuerung der Kälteleistung derart angesteuert wird, daß der Phasenanschnittwinkel bei großer Kälteleistung kleiner ist — hohe steuerbare Teilspannung — als bei kleiner Kälteleistung — niedrige steuerbare Teilspannung — (Fig. 1).

2. Energieversorgungseinrichtung für eine an einem Reisezugwagen angeordnete mit einem Kälteaggregat und einer Widerstandsheizung (6) ausgestattete Klimaanlage sowie ein Batterieladegerät (5) und Lüftermotoren, die wahlweise an ein Wechsel- oder Gleichspannungsnetz angeschlossen werden kann, die verschieden hohe Wechselspannungen mit unterschiedlicher Frequenz oder verschieden hohe Gleichspannungen führen, wobei bei Gleichspannungseinspeisung ein Hochleistungs-Wechselrichter zum Einsatz kommt, mit wenigstens einem Hochspannungs-Transformator (1a, 1b), einem Gleichrichtergerät (22), einem aus Einphasen-Wechselrichtern in Mittelpunktschaltung (11a, 11b, 11c) aufgebauten Mehrphasen-Wechselrichter zur spannungs- und frequenzveränderlichen Speisung eines Kompressormotors (7) für das Kälteaggregat sowie einer für die Klimaanlage dienenden Regelung, die auf den Kompressormotor und/ oder die Widerstandsheizung einwirkt, dadurch gekennzeichnet, daß der Kompressormotor ein Drehstrommotor (7) ist, wobei die Frequenz der Thyristor-Einphasen-Wechselrichter (11a, 11b, 11c) entsprechend der Höhe der einem Dreikanal-Taktgeber (17) zugeführten Eingangs-Gleichspannung des Mehrphasen-Wechselrichters gesteuert ist, daß das Gleichrichtergerät (22) eine Mittelpunktschaltung mit Dioden in den Gleichrichterzweigen und im Mittelpunktanschluß umfaßt, die durch anschnittgesteuerte Thyristoren zu einer Graetzschaltung ergänzt wird, wobei ein Spartransformator (1a, 1b) mit ausgangsseitiger Mittelpunktschaltung vorgeschaltet ist, und wobei die Dioden (23; 24; 25) eine Teilspannung als Grundspannung und die Thyristoren eine weitere steuerbare Teilspannung liefern und der Phasenanschnittwinkel für die Thyristoren in Abhängigkeit von den Signalen eines Temperaturmeßwertgebers zur Steuerung der Kälteleistung derart angesteuert wird, daß der Phasenanschnittwinkel bei großer Kälteleistung kleiner ist — hohe steuerbare Teilspannung — als bei kleiner Kälteleistung — niedrige steuerbare Teilspannung — (Fig. 2 und 3).

3. Energieversorgungseinrichtung für eine an einem Reisezugwagen angeordnete mit einem Kälteaggregat und einer Widerstandsheizung (6) ausgestattete Klimaanlage sowie ein Batterieladegerät (5) und Lüftermotoren, die wahlweise an ein Wechsel- oder Gleichspannungsnetz angeschlossen werden kann, die verschieden hohe Wechselspannungen mit unterschiedlicher Frequenz oder verschieden hohe Gleichspannungen führen, wobei bei Gleichspannungseinspeisung ein Hochleistungs-Wechselrichter zum Einsatz kommt, mit wenigstens einem Hochspannungs-Transformator (1c), einem Gleichrichtergerät, einem aus Einphasen-Wechselrichtern in Mittelpunktschaltung (11d, 11e, 11f) aufgebauten Mehrphasen-Wechselrichter zur spannungs- und frequenzveränderlichen Speisung eines Kompressormotors (7a) für das Kälteaggregat sowie einer für die Klimaanlage dienenden Regelung, die auf den Kompressormotor und/ oder die Widerstandsheizung einwirkt, dadurch gekennzeichnet, daß der Kompressormotor ein Drehstrommotor (7a) ist, wobei die Frequenz der speisenden Thyristor-Einphasen-Wechselrichter (11d, 11e, 11f) entsprechend der Höhe der einem Dreikanal-Taktgeber (17) zugeführten Eingangs-Gleichspannung des Mehrphasen-Wechselrichters gesteuert ist, daß das Gleichrichtergerät eine Mittelpunktschaltung mit anschnittgesteuerten Thyristoren (29a, 29b) in den Gleichrichterzweigen und Diodenanschluß (27, 28) im Mittelpunktzweig umfaßt und daß für den Betrieb mit höherer Spannung zuschaltbare, nicht anschnittgesteuerte Thyristoren (30a, 30b) das Gleichrichtergerät zu einer Graetzschaltung ergänzen, wobei ein Spartransformator (1c) mit ausgangsseitiger Mittelpunktschaltung vorgeschaltet ist, und wobei die anschnittgesteuerten Thyristoren (29a, 29b) in Verbindung mit den Mittelpunktsdioden (27, 28) eine Teilspannung als Grundspannung und die anschnittgesteuerten Thyristoren (29a, 29b) in Verbindung mit den nicht anschnittgesteuerten Thyristoren (30a, 30b) eine weitere steuerbare Teilspannung liefern und der Phasenanschnittwinkel für die Thyristoren (29a, 29b) in Abhängigkeit von den Signalen eines Temperaturmeßwertgebers zur Steuerung der Kälteleistung derart angesteuert wird, daß der Phasenanschnittwinkel bei großer Kälteleistung kleiner ist — hohe steuerbare Teilspannung — als bei kleiner Kälteleistung — niedrige steuerbare Teilspannung — (Fig. 6).

4. Energieversorgungseinrichtung nach einem der Ansprüche 1 bis 3, dadurch gekennzeichnet, daß der Kompressormotor (7) mit Wicklungsmittenanzapfungen ausgestattet ist und daß die Wicklungen des Kompressormotors (7) gleichzeitig als Wechselrichterwicklungen für die Einphasen-Wechselrichter in Mittelpunktschaltung dienen (Fig. 1).

5. Energieversorgungseinrichtung nach Anspruch 1, dadurch gekennzeichnet, daß jeder Einphasen-Wechselrichter (11d, 11e, 11f) jeweils einen Spartransformator (26d, 26e, 26f) als Wechselrichtertransformator für die Einphasen-Wechselrichter in Mittelpunktschaltung aufweist.

## Claims

1. Power supply equipment for an air conditioning system attached to a passenger railway car and equipped with a refrigerating unit and resistance heating (6) as well as a battery charger (5) and fan motors, which can be connected as required to an ac or dc system carrying different ac voltages at varying frequencies or different dc voltages, a high-power inverter being employed with dc supply with at least one high-tension transformer (1), one rectifier unit (9), one polyphase inverter built up of single-phase inverters in mid-point connection (11a, 11b, 11c), for feeding — variable in voltage and frequency — a compressor motor (7) for the refrigerating unit as well as automatic control gear for the air conditioning system which acts on the compressor motor and/or resistance heating, characterized in that the compressor motor is a three-phase ac motor (7), with the frequency of the thyristor single-phase inverters feeding it (11a, 11b, 11c) being controlled in accordance with the polyphase inverter input dc voltage fed to a three-channel cycle timer, (17) that the rectifier unit is designed in mid-point connection and provided with diodes (12a, 12b) and thyristors (13a, 13b), preceded by an autotransformer (1) with tappings on the output side, and that the tappings carrying the higher voltages are connected to the thyristors (13a, 13b), and those carrying the lower voltages to the diodes (12a, 12b), said diodes (12a, 12b) supplying a component voltages as base voltage and the thyristors (13a, 13b) supplying a further controllable component voltage, and that for controlling the refrigerating rate and depending on the signals from a temperature transducer the phase shift angle for the thyristors (13a, 13b) is controlled in such a way that at high refrigerating rate the phase shift angle is smaller — high controllable component voltage — than at low refrigerating rate — low controllable component voltage — (Fig. 1).

2. Power supply equipment for an air conditioning system attached to a passenger railway car and equipped with a refrigerating unit and resistance heating (6) as well as a battery charger (5) and fan motors, which can be connected, as required, to an ac or dc system, carrying different ac voltages at varying frequencies or different dc voltages, a high-power inverter being employed with dc supply, with at least one high-tension transformer (1a, 1b), one rectifier (22), one polyphase inverter built up of single-phase inverters in mid-point connection (11a, 11b, 11c) for feeding, variable in voltage and frequency, a compressor motor (7) for the refrigerating unit, as well as automatic control gear for the air conditioning system which acts on the compressor motor and/or resistance heating, characterized in that the compressor motor is a three-phase ac motor (7), the frequency of the thyristor single-phase inverters (11a, 11b, 11c) being controlled in accordance with the polyphase inverter input dc voltage fed to a three-channel cycle timer (17), that the rectifier unit (22) has a mid-point connection with diodes in the rectifier branches and in the mid-point connection which, together with phase-controlled thyristors, forms a Graetz rectifier, preceded by an autotransformer (1a, 1b) with mid-point connection on the output side, the diodes (23; 24; 25) supplying a component voltage as base voltage and the thyristors a further controllable component voltage, and that, for controlling the refrigerating rate, the phase shift angle for the thyristors is controlled in such a way that at high refrigerating rate the angle is smaller — high controllable component voltage — than at low refrigerating rate — low controllable component voltage — (Figs. 2 and 3).

3. Power supply equiqment for an air conditioning system attached to a railway passenger car and equipped with a refrigerating unit and resistance heating (6) as well as a battery charger (5) and fan motors, wich can be connected, as required, to an ac or dc system, carring different ac voltages at varying frequencies or different dc voltages, a high-power inverter being employed with dc supply, with at least one high-tension transformer (1c), one rectifier, one polyphase inverter built up of single-phase inverters in mid-point connection (11d, 11e, 11f) for feeding, variable in voltage and frequency, a compressor motor (7a) for the refrigerating unit, as well as automatic control gear for the air conditioning plant which acts on the compressor motor and/or the resistance heating, characterized in that the compressor motor is a three-phase ac motor (7a), the frequency of the thyristor single-phase inverters feeding it (11d, 11e, 11f) being controlled in accordance with the polyphase inverter input dc voltage fed to a three-channel cycle timer (17), that the rectifier comprises a mid-point connection with phase-controlles thyristors (29a, 29b) in the rectifier branches and diode connection (27, 28) in the mid-point branch, and that, for higher-voltage operation, non-phase-controlled thyristors (30a, 30b) can be connected to turn the rectifier unit into a Graetz rectifier, preceded by an autotransformer (1c) with mid-point connection on the output side, with the phase-controlled thyristors (29a, 29b) supplying, in connection with mid-point diodes (27, 28) a component voltage as base voltage and the phase-controlled thyristors (29a, 29b), in connection with the non-phase-controlled thyristors (30a, 30b) supplying a further controllable component voltage, and that, for controlling the refrigerating rate, the phase shift angle for the thyristors (29a, 29b) is, depending on the signals of a temperature transducer, controlled in such a way that at high refrigerating rate the phase shift angle is smaller — high controllable component voltage — than at low refrigerating rate — low controllable component voltage — (Fig. 6).

4. Power supply equipment in accordance with any of the claims 1 to 3, characterized in that the compressor motor (7) is equipped with winding centre taps and that the windings of the compressor motor (7) also act as inverter windings for the single-phase inverters in mid-point connection (Fig. 1).

5. Power supply equipment in accordance with claim 1, characterized in that each single-phase inverter (11d, 11e, 11f) features an autotransformer (26d, 26e, 26f) serving as inverter transformer for the single-phase inverters in mid-point connection.

### Revendications

1. Dispositif d'alimentation en énergie pour une installation de climatisation équipant une voiture de voyageurs ferroviaire et comportant un groupe frigorifique et un dispositif de chauffage à résistances (6) ainsi qu'un chargeur de batterie (5) et des moteurs à ventilateurs, et qui peut être raccordée au choix à des réseaux à tension alternative ou à tension continue qui fournissent des tensions alternatives plus ou moins élevées et de fréquences différentes ou des tensions continues plus ou moins élevées; pour l'alimentation en tension continue on utilise un convertisseur à grande puissance en combinaison avec au moins un transformateur à haute tension (1), un montage redresseur (9), un convertisseur polyphasé comprenant des convertisseurs monophasés à points de liaison médians (11a, 11b, 11c) pour l'alimentation en tension et en fréquence variables du compresseur (7) du groupe frigorifique, ainsi qu'un dispositif de réglage pour l'installation de climatisation et qui agit sur le moteur du compresseur et/ou le chauffage à résistances, caractérisé en ce que le moteur du compresseur est un moteur triphasé (7), la fréquence des convertisseurs d'alimentation (11a, 11b, 11c, monophasés et à thyristors, étant commandée en fonction de la valeur de la tension continue appliquée à l'entrée d'un générateur d'horloge (17) à trois canaux et délivrée par le convertisseur polyphasé, en ce que le montage redresseur est réalisé par des liaisons à points médians et présente des diodes (12a, 12b) et des thyristors (13a, 13b) en amont desquels est branché un auto-transformateur (1) dont l'enroulement de sortie présente des prises médianes, en ce que les prises médianes délivrant la tension la plus élevée sont reliées aux thyristors (13a, 13b), en ce que les prises médianes délivrant la tension la plus faible sont reliées aux diodes (12a, 12b), les diodes (12a, 12b) fournissant une tension partielle en tant que tension de base et les thyristors (13a, 13b) une tension partielle pouvant être commandée et en ce que pour agir sur la capacité frigorifique l'angle d'attaque de phase des thyristors (13a, 13b) est commandé en fonction de signaux émis par un capteur de température de façon que l'angle d'attaque de phase soit plus petit-tension partielle réglable élevée — lors d'une capacité frigorifique importante que lors d'une capacité frigorifique peu importante — tension partielle réglable faible — (fig. 1).

2. Dispositif d'alimentation en énergie pour une installation de climatisation équipant une voiture de voyageurs ferroviaire et comportant un groupe frigorifique et un dispositif de chauffage à résistance (6) ainsi qu'un chargeur de batterie (5) et des moteurs à ventilateurs et qui peut être raccordé, au choix, à des réseaux à tension alternative ou à tension continue qui délivrent des tensions alternatives plus ou moins élevées et de fréquences différentes ou des tensions continues plus ou moins élevées; pour l'alimentation, en tension continue, on utilise un convertisseur à grande puissance et au moins un transformateur à haute tension (1a, 1b), un montage redressuer (22), un convertisseur polyphasé réalisé à partir de convertisseurs monophasés 11a, 11b, 11c à circuit à points de liaison médians pour alimenter en tension et en fréquence variables le moteur 7 du compresseur d'un groupe frigorifique ainsi qu'un dispositif pour le réglage de l'installation de climatisation et qui agit sur le moteur du compresseur et/ou sur le chauffage â résistances, caractérisé en ce que le moteur du compresseur est un moteur triphasé (7), la fréquence des convertisseurs monophasés à thyristors 11a, 11b, 11c étant alors commandée en fonction de la valeur de la tension continue d'entrée du convertisseur polyphasé et appliquée à un générateur d'horloge (17) à trois canaux, et en ce que le montage redresseur (22) comprend un circuit à points médians avec des diodes dans les branches redresseuses reliées par des points médians, ce montage étant complété pour former un pont redresseur à double alternance; par des thyristors commandés par déphasage, un auto-transformateur (1a, 1b) qui présente, sur son côté de sortie un montage à liaison par points médians étant prévu en amont du pont redresseur, en ce que des diodes 23, 24, 25 fournissent une tension partielle en tant que tension de base, et les thyristors une autre tension partielle pouvant être commandée, et en ce que l'angle d'attaque de phase des thyristors est commandé, pour le réglage de la capacité frigorifique, en fonction des signaux émis par un capteur de température de façon que l'angle d'attaque de phase soit plus petit lors d'une capacité frigorifique importante — tension partielle réglable élevéeque lors d'une faible capacité frigorifique — tension partielle réglable faible (fig. 2 et 3).

3. Dispositif d'alimentation en énergie pour une installation de climatisation équipant une voiture de voyageurs ferroviaire et comportant un groupe frigorifique et un dispositif de chauffage (6) à résistances ainsi qu'un chargeur de batterie (5) et des moteurs à ventilateurs et qui peut être raccordée, au choix, à des réseaux d'alimentation à tension alternative ou à tension continue qui fournissent des tensions alternatives plus ou moins élevées et de fréquences différentes ou des tensions continues plus ou moins élevées; pour l'alimentation en tension continue on utilise un convertisseur à grande puissance en combinaison avec au moins un transformateur à haute tension (1c), un montage redresseur, un convertisseur polyphasé composé de convertisseurs monophasés (11d, 11e, 11f) à circuits à points de liaison médians et destiné à alimenter en tension et en fréquence différentes le moteur (7a) du compresseur du groupe frigorifique, ainsi qu'un dispositif destiné au réglage de l'installation de climatisation et qui agit sur le moteur du compresseur et/ou sur le chauffage à résistances, caractérisé en ce que le moteur du compresseur est un moteur triphasé (7a), la fréquence des convertisseurs d'alimentation monophasés à thyristors (11d, 11e, 11f) étant alors commandée en fonction de la valeur de la tension continue d'entrée du convertisseur polyphasé et appliquée à un générateur d'horloge (17) à trois canaux, en ce que le montage redresseur comporte un circuit à points de liaison médians comprenant dans les branches redresseuses de thyristors (29a, 29b) commandés par déphasage et un circuit à diodes (27, 28) dans la branche à points de liaison médians, et en ce que, pour le fonctionnement sous une tension plus élevée, des thyristors (30a, 30b) pouvant être connectés additionnellement, mais non commandés par déphasage, complètent le montage redresseur pour former un pont redresseur à double alternance, un auto-transformateur (1c) présentant sur son côté de sortie un circuit à points communs étant monté en amont du montage redresseur, en ce que les thyristors (29a, 29b) commandés par déphasage délivrent, en coopération avec les diodes (27, 28) reliées par des points médians, une tension partielle en tant que tension de base et les thyristors (29a, 29b) commandés par déphasage délivrent en liaison avec les thyristors (30a, 30b), non commandés par déphasage, une autre tension partielle pouvant être commandée, et en ce que pour la commande de la capacité frigorifique l'angle d'attaque de phase des thyristors (29a, 29b) peut être commandé en fonction des signaux émis par un capteur de température de façon que l'angle d'attaque de phase soit plus petit por une capacité frigorifique importante — tension partielle réglable élevée — que pour une plus faible capacité frigorifique — tension partielle réglable moins élevée (fig. 6).

4. Dispositif d'alimentation en énergie suivant l'une des revendications 1 à 3, caractérisé en ce que les enroulements du moteur (7) du compresseur présentent des prises médianes et en ce que les enroulements du moteur (7), branchés pour établir un circuit à points médians, servent en même temps d'enroulements aux convertisseurs monophasés (fig. 1).

5. Dispositif d'alimentation en énergie suivant la revendication 1, caractérisé en ce que chacun des convertisseurs monophasés (11d, 11e, 11f) présente un auto-transformateur (26d, 26e, 26f) en tant que transformateur pour les convertisseurs monophasés reliés par un circuit à points médians.

# FIG. 1

0 015 462

# FIG.2

1a

23

10

24a

22

24

2

6

# FIG.3

1b

25

10

22

2

6

# FIG. 4

# FIG. 5

FIG.6